# EUROPEAN PATENT SPECIFICATION

(11) **EP 0 773 116 B1**
(45) Date of publication and mention of the grant of the patent: **27.12.2000**
(21) Application number: 96117948.8
(22) Date of filing: 08.11.1996
(51) Int. Cl.: B60C 11/03, B60C 11/11, B60C 11/04, B60C 11/12

(54) **Motor-vehicle pneumatic tyre having tread pattern particularly appropriate for running on snow-covered road surfaces**
Kraftfahrzeug-Luftreifen mit einem Laufflächenprofil besonders geeignet zum Laufen auf schneebedeckten Strassenoberflächen
Bandage pneumatique pour véhicule motorisé, pourvu d'un profil de bande de roulement particulièrement adapaté au roulage sur surfaces couvertes de neige

(30) Priority: 13.11.1995 IT MI952327
(43) Date of publication of application: 14.05.1997
(73) Proprietor: PIRELLI PNEUMATICI Società per Azioni, 20126 Milano (IT)
(72) Inventor: Boiocchi, Maurizio, Segrate (MI) (IT); Colombo, Gianfranco, Concorezzo (MI) (IT)
(74) Representative: Giannesi, Pier Giovanni

(56) References cited:
- EP-A- 0 485 883
- EP-A- 0 609 195
- DE-A- 4 300 695
- US-A- 4 574 856
- US-A- 4 962 801
- PATENT ABSTRACTS OF JAPAN vol. 018, no. 424 (M-1652), 9 August 1994 & JP 06 127218 A (BRIDGESTONE CORP), 10 May 1994,
- PATENT ABSTRACTS OF JAPAN vol. 018, no. 292 (M-1615), 3 June 1994 & JP 06 055909 A (SUMITOMO RUBBER IND LTD), 1 March 1994,

## Description

The present invention relates to a pneumatic tyre for vehicle wheels provided with a tread pattern particularly appropriate for running on snow-covered road surfaces, comprising at least two series of transverse grooves disposed on opposite sides relative to an equatorial plane of the tyre and symmetrically converging at said equatorial plane; at least two circumferential grooves symmetrically spaced apart from the equatorial plane of the tyre and confining, together with the transverse grooves, one or more rows of centre blocks disposed symmetrically to the equatorial plane and at least two rows of shoulder blocks located on respectively opposite sides relative to the centre block rows.

In more detail, the invention refers to motor-vehicle pneumatic tyres of the so-called "winter" type.

It is known that modern tyres of the above type are required to possess not only excellent behavioural features with reference to travels on a snow-covered road surface, but also a good qualitative level in terms of operating features such as rolling smoothness, ride behaviour on a wet road surface and kilometric yield, for example. The ride behaviour on a dry road surface and the ride noiselessness too, although of less importance as compared with the previously mentioned features, help in increasing and decreasing the qualitative evaluation of a winter tyre.

Said behavioural and operating features are achieved by forming appropriate circumferential and transverse grooves in the tread band, which grooves are suitably sized and oriented and give rise to the formation of blocks usually aligned in rows disposed consecutively side by side and extending circumferentially to the tyre.

In addition, an indispensable detail for improving the behavioural running features of a tyre on a snow-covered road surface is the presence of appropriate "lamellae" or "fins" in the blocks, that is a thick series of narrow cuts or grooves small-sized in a circumferential direction, substantially oriented transversely of the rolling direction and substantially having the task of efficiently collecting and retaining the snow, since snow-on-snow friction is, as known, stronger than rubber-on-snow friction.

In more detail, a type of winter tyre which has been recently commercialized by the Applicant has a pair of circumferential straight-extending grooves in the tread band, which grooves are disposed symmetrically to the equatorial plane of the tyre and spaced apart by a distance substantially corresponding to half the overall width of the tread band.

These circumferential grooves are combined with two series of transverse grooves each extending with a gradually increasing inclination from the outer edge of the tread band until close to the equatorial plane.

The transverse grooves of the two series are symmetrically converging at the equatorial plane of the tyre according to a given preferential rolling direction and have the respective vertices consecutively alternated with respect to each other along the perimetric extension of the tread band at the equatorial plane itself.

In such a tread band, the configuration of the transverse grooves is adapted to promote good traction qualities, by virtue of the mutual convergence of the grooves themselves in the rolling direction.

The circumferential straight-extending grooves, in turn, enable the water present in the ground-contacting area of the tyre to be efficiently eliminated during a running on a wet road surface, thereby preventing arising of the well known and dangerous aquaplane effect.

The traction capability and, as a whole, the ride behaviour on a snow-covered road surface are assisted by the presence of a thick arrangement of fins on the blocks generated by the intersection between the longitudinal and transverse grooves and by appropriate straight extending hollows associated with the transverse grooves, in the space confined between the two circumferential grooves, each of said hollows extending in a circumferential direction over a short length starting from the respective transverse groove.

EP-609,195 describes a "winter tyre", according to the preamble of claim 1, suitable to be used on cars which can reach very high speeds. Said tread band comprises:
a) a plurality of transverse grooves extending from the shoulders to the equatorial plane; said transverse grooves cross the equatorial plane for a limited portion and converge towards said plane in a determined direction,
b) and a plurality of circumferential grooves formed by consecutive oblique segments and converging towards the equatorial plane in a direction opposite to the converging direction of the transverse grooves.

Furthermore, each oblique segment of the circumferential grooves consists of a larger portion and a smaller portion, the latter being the first one to come into contact with the ground when the tyre is rotated.

Thanks to said small portions the adjacents blocks, comprised between two contiguous transverse grooves, are pushed reciprocally in contact by the lateral forces which occure when stirring, in particular at high speeds. In this way, the adjacent blocks mutually support each other and the deformation of the blocks is conveniently limited.

In order to face the adverse winter conditions, the tread band may also comprise blocks which are provided with lamellae suitable for contacting snow-covered and/or wet grounds.

The particular tread band described by EP-609,195 is aimed to improve the flexure rigidity and the stability of the tyre tread profile in order to achieve a prompt and precise reply of the tyre to the steering forces.

The Applicant's efforts have been directed towards finding out how said known tyres could be further improved, in particular as regards the behavioural qualities of same on a snow-covered road surface.

In accordance with the present invention, it has been found that by making the circumferential grooves in the form of stretches oriented obliquely to the circumferential direction and symmetrically converging at the equatorial plane in a direction opposite to the convergence direction of the transverse grooves and by providing at least one grip hollow of substantially trapezoidal shape associated with each of said transverse grooves diverging in a direction opposite to the rolling direction, it is possible to achieve a greater behavioural homogeneity in the tyre in terms of traction and braking capabilities, even and above all with reference to a ride on a snow-covered road surface.

In more detail, it is an object of the present invention a pneumatic tyre for vehicle wheels comprising a tread band provided with a raised pattern particularly appropriate for running on snow-covered road surfaces, comprising:
- at least two series of transverse grooves disposed on opposite sides relative to an equatorial plane of the tyre and symmetrically converging at said equatorial plane;
- at least two circumferential grooves symmetrically spaced apart from the equatorial plane of the tyre and confining, together with the transverse grooves, one or more rows of centre blocks disposed symmetrically to the equatorial plane and at least two rows of shoulder blocks located on respectively opposite sides relative to the centre block rows,
- said circumferential grooves being each defined by a sequence of stretches oriented obliquely to the circumferential direction of the tyre, the oblique stretches forming said circumferential grooves symmetrically converging at the equatorial plane in a direction opposite to the convergence direction of the transverse grooves,
characterized in that at least one grip hollow is associated with each of said transverse grooves, said hollow being of substantially trapezoidal shape and having an inner circumferential edge and an outer circumferential edge which respectively diverge in a direction opposite to the rolling direction assigned to the tread band each of said grip hollows extending across one of said transverse grooves at two contiguous centre blocks.

The distance between said longitudinal grooves preferably is included between 25% and 35% of the overall width of the tread band, measured between the opposite side edges of said band, and each of the oblique stretches of the circumferential grooves extends between two consecutive transverse grooves and defines respectively opposite circumferential edges of a centre block and a shoulder block, so that each of said centre and shoulder blocks has a corner projecting inwardly of the respective circumferential groove with respect to the opposite corner of the immediately following block.

According to a preferred embodiment of the invention, said hollow has an inner circumferential edge and an outer circumferential edge which respectively diverge by an angle included between 3° and 15°, in a direction opposite to the rolling direction.

In a preferential solution, each of said grip hollows has a maximum width included between 3 and 7 mm and its inner circumferential edge is substantially parallel to the circumferential direction of the tread band.

Also provided is a circumferential central cut extending in the equatorial plane to mutually separate two of said centre block rows.

This central cut, at least at one base portion thereof, has a width included between 2 and 4 mm, and generates two respectively opposite separation walls between each pair of centre blocks, each belonging to one of said centre rows, which walls are designed to come into mutual contact relation when the tread band is deformed against the roadway.

Advantageously, each of said transverse grooves has an outer portion confined between two of said shoulder blocks, in which portion an outer first and an outer second consecutive stretches are defined which converge in a direction opposite to the rolling direction.

The outer first stretch, terminating at the side edge of the tread band, preferably has an inclination included between 1° and 10° to the axial direction of the tread band, whereas the outer second stretch communicating with the respective circumferential groove, has an inclination included between 8° and 16° to said axial direction.

In addition, preferably each of said transverse grooves is provided with a gradually increasing width, moving away from the equatorial plane.

To this end, said outer second stretch communicating with the respective circumferential groove, is of a width lower than that of the outer first stretch, terminating at the side edge of the tread band.

Each of said transverse grooves further has an inner portion extending between two centre blocks in which an inner first stretch communicating with the respective circumferential groove and an inner second stretch extending close to the equatorial plane and having a lower width than the inner first stretch of said inner portion are defined, the inner first stretch of said inner portion preferably being of lower width than the outer second stretch of said outer portion.

In addition, the inner second stretch of said inner portion is circumferentially offset in the rolling direction with respect to the inner first stretch.

Still in accordance with a preferential solution, the oblique stretches forming said circumferential grooves are inclined to an angle included between 8° and 22° relative to the circumferential direction of the tread band and intersect the transverse grooves at an angle included between 80° and 110°.

In addition, provision may be also made for auxiliary hollows formed in the shoulder blocks at the convergence points between the outer first and outer second stretches of the outer portion of each transverse groove and preferably oriented parallelly to the oblique stretches of the circumferential grooves, of a lower depth than the respective transverse grooves.

In addition, the auxiliary hollows of each shoulder block can be mutually interconnected by an auxiliary cut extending parallelly to the oblique stretches of the circumferential grooves and having a lower depth than the auxiliary hollows.
Preferably, the transverse grooves further have tapering end portions at the side edges of the tread band.

Each of said centre and shoulder blocks also has fin-shaped cuts oriented substantially parallelly to said transverse grooves.

Further features and advantages will become more apparent from the detailed description of a preferred embodiment of a pneumatic tyre for motor-vehicle wheels provided with a tread band having a raised pattern particularly appropriate for running on snow-covered road surfaces according to the present invention, given hereinafter, by way of non-limiting example, with reference to the accompanying drawings, in which:
- Fig. 1 shows the plan development of a circumferential portion of the tread band in reference;
- Fig. 2 is a cross-sectional view of the tread band taken along line II-II in Fig. 1.

With reference to the drawings, a tread band for pneumatic tyres in particular adapted for running on snow-covered road surfaces according to the present invention has been generally identified by reference numeral 1; in particular this tread band is in the specific version for size 175/70 R 13.

Said tyres have a carcass, preferably of the radial type, reinforced with a corresponding belt structure, (quite known in se and not of importance to the ends of the present invention) crownwise to which a tread band of appropriate elastomer material is arranged, which tread band is molded with a raised pattern and is intended for rolling contact on the ground. The tread band 1 has at least two series of transverse grooves, generally denoted by 2, disposed on opposite sides of the equatorial plane of the tyre on which the tread band 1 is mounted. This equatorial plane is denoted by line "X" in the accompanying drawings.

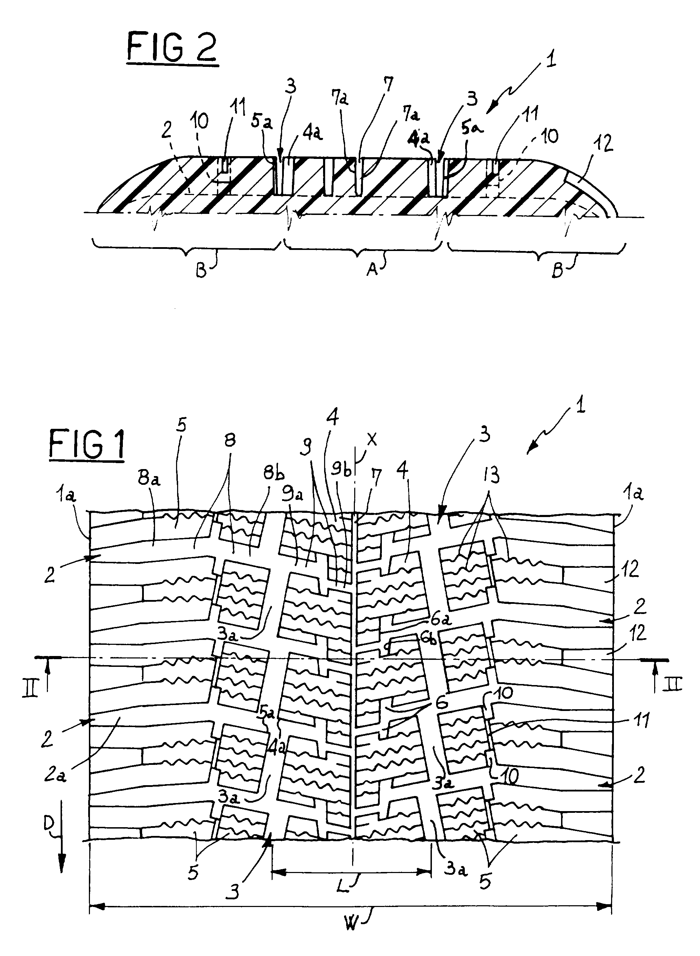

As can be seen, at least close to the equatorial plane "X" the transverse grooves substantially have a course symmetrically converging at the equatorial plane itself according to a given rolling direction denoted by arrow "D" in Fig. 1, which has been previously assigned to the tyre.

The tread band 1 further has at least two circumferential grooves, generally identified by 3, disposed simmetrically to the equatorial plane "X" and preferably spaced apart from each other by a measure "L" included between 25% and 35% of the overall width "W" of the tread band 1, measured between the opposite side edges 1a thereof. The circumferential grooves 3 together with the transverse grooves 2 define one or more rows of centre blocks 4, disposed symmetrically to the equatorial plane "X" and at least two rows of shoulder blocks 5 located on respectively opposite sides with respect to the centre blocks 4.

Advantageously, each of the circumferential grooves 3 is defined by a sequence of stretches 3a oriented obliquely to the circumferential direction of the tyre. In more detail, the oblique stretches 3a forming either of the circumferential grooves 3 symmetrically converge at the equatorial plane "X" in a direction opposite to the convergence direction of the transverse grooves 2, that is the rolling direction "D".

Preferably, the inclinations of the transverse grooves 2 and oblique stretches 3a of the longitudinal grooves 3 are such selected that the corners of the shoulder and centre blocks 5 and 4 generated by the intersection thereof have a summit angle included between 80° and 110°, so that they have an excellent resistance to wear.

More particularly, the inclination of the oblique stretches 3a of the circumferential grooves 3 to the circumferential direction is preferably included between 8° and 22°.

Close to the intersection with the corresponding circumferential groove 3, each transverse groove 2 is respectively divided into an outer portion 8, confined between two shoulder blocks 5 and an inner portion 9 confined between two contiguous centre blocks 4. Defined along the outer portion 8 of each groove 2 is an outer first stretch 8a terminating at the side edge 1a of the tread band 1 and an outer second stretch 8b, consecutive to the outer first one and terminating at the respective circumferential groove 3. The inner portion 9 of each transverse groove 2, in turn, has an inner first stretch 9a opening into the circumferential groove 3 and an inner second stretch 9b terminating at the equatorial plane "X". As a whole, the transverse grooves 2 have a gradually increasing width moving away from the equatorial plane "X". To this end, the outer second stretch 8b of the outer portion 8 of each transverse groove 2 has a width preferably included between 4 and 9 mm and in any case lower than that of the outer first stretch 8a of the same outer portion 8 which is included between 5 and 11 mm.

The width of the inner first stretch 9a of the inner portion of each transverse groove 2 is lower that that of the outer second stretch 8b of the outer portion 8, whereas the inner second stretch 9b of the inner portion 9 has a lower width than the inner first stretch 9a of the same inner portion.

In addition, the inner second stretches 9b of the inner portions 9 are preferably provided to be offsets in the rolling direction "D" with respect to the corresponding inner first stretches 9a. This enables the mutual convergence effect of the transverse grooves 2 to be stressed close to the equatorial plane "X", without a reduction of the angle formed by said grooves with the circumferential direction of the tread band, which is coincident with the equatorial plane itself, being for this reason involved. In fact, this angle is substantially constant at least over the whole extension of the inner portion 9 and preferably included between 8° and 16° with respect to the axial direction.

Preferably, the inclination of the outer second stretch 8b of the outer portion 8 has the same value as the inclination of stretches 9a, 9b of the inner portion 9. The outer first stretch 8a of the outer portion 8 of each transverse groove 2 instead has an inclination included between 1° and 10°, still with respect to the axial direction, facing away from that of the outer second stretch 8b of the same outer portion. In this manner, stretches 8a, 8b of the outer portion 8 mutually converge in a direction opposite to the rolling direction "D".

In conclusion, the mutual arrangement of the longitudinal (3) and transverse (2) grooves is such that in the tread band 1 width a central area denoted by "A" in Fig. 2 and two side areas denoted by "B" are defined. The central area A is occupied by the centre blocks 4 and is specifically appropriate to enhance the traction capability features of the tyre, whereas the side areas "B" are entrusted with the task of ensuring good performance on braking, that is when the tangential stresses taking place between the tread band and the roadway are directed in the opposite way as compared with what happens on traction.

With reference to the central area "A", it should be noted in fact that the transverse grooves 2 converge at the equatorial plane "X" according to a substantially V-shaped configuration, the vertex of which is turned towards the rolling direction "D". On running on a snow-covered road surface, each pair of transverse grooves 2 belonging to the same block pitch comes into contact with the roadway at the ground-contacting area, first by its own vertex which is immediately filled with snow. Progressive entering of snow along the remaining parts of the transverse grooves, as rolling goes on, causes the snow present at the above mentioned "V" vertex to become packed, so that, as a result, said snow is retained by the transverse grooves, to advantage of a good traction capability.

In order to ensure an efficient snow collection and retention effect, in accordance with the present invention grip hollows 6 of substantially trapezoidal form are provided to be associated with the transverse grooves 2. Said hollows 6 each have an inner circumferential edge 6a and an outer circumferential edge 6b that respectively diverge according to an angle included between 3° and 15° in a direction opposite to the rolling direction "D". In a preferential solution, each grip hollow 6 which completely crosses the corresponding transverse groove 2 thereby extending at two contiguous centre blocks 4, is provided to have a maximum width, at its largest point, included between 3 and 7 mm and its inner circumferential edge 6a is oriented parallelly to the circumferential extension direction of the tread band.

On running, each grip hollow 6 reaches the ground contact area first by its narrower portion which is immediately filled with the snow present on the roadway. As rolling goes on, the larger end portion of the grip hollow 6 is filled with snow too and, by effect of the vertical load, said snow is forced into the hollow itself. So the snow which had already filled the narrower portion of the hollow is wedged between the mutually converging circumferential edges 6a and 6b and becomes therein packed. Thus the grip hollows 6 appear to be capable of efficiently collecting and retaining the snow present on the roadway.

In order to improve the operating conditions of the central portion "A", it is also preferably provided that the centre block rows be mutually separated by at least one central circumferential cut 7 extending in the equatorial plane "X". This central cut, at least in the lower area thereof, has a relatively reduced width, included, by way of example, between 2 and 4 mm, so that between each pair of side-by-side centre blocks 4 two separation walls 7a are generated which are adapted to come into mutual contact relation when, at the ground-contacting area, the tread band 1 is deformed against the roadway, thereby modifying its transverse profile from a starting convex configuration to a final flattened configuration.

In conclusion, the central cut 7 performs the function of defining a pliability point in the tread band 1 so as to enable said band to be easily flattened against the roadway without causing elastic deformations in the remaining parts of the central area "A", in that said deformations would facilitate an undesired ejection of the snow entrapped in the grooves 2, 3 and grip hollows 6. The mutual mating of the opposite walls 7a further increases packing of the snow within the transverse grooves 2 and, when a vehicle is running both on a snow-covered roadway and on a wet or dry roadway, a structural stabilization of the tread band in the central area 6 is determined, to advantage of the directional features of the tyre.

The longitudinal grooves 3 separate the central area "A" from the side areas "B" and the configuration of said grooves is susceptible of determining advantages both under running and braking conditions.

In fact, the oblique and parallel orientation of the inclined stretches 3a is such that the longitudinal groove 3 is given a broken-line course, in which each oblique stretch 3a extends between two contiguous transverse grooves 2 and defines the opposite cirumferential edges of one of the centre blocks 4 and one of the shoulder blocks 5, respectively.

Under this situation, each of the centre and shoulder blocks 4 and 5, has a corner 4a, 5a projecting inwardly of the respective circumferential groove 3 with respect to the opposite corner of the immediately following block. Under this situation, the projecting corners 4a of the centre blocks behave like teeth ensuring a grip on the snow on traction, whereas the projecting corners 5a of the shoulder blocks 5 produce the same effect on braking.

With reference to the outer portions "B", it is to be noted that the outer first and second stretches 8a, 8b of the outer portion 8 of each transverse groove 2 have such an orientation that they converge in a direction opposite to the rolling direction "D", thereby forming an inverted-vertex "V", as compared with the one formed by the central portions 9 of the same grooves.

Under this situation, the outer portions 8 furnish an efficient grip action on the snow, in particular during braking, that is when the tangential efforts transmitted by the tread band 1 on the roadway are in the opposite direction with respect to the case in which traction occurs.

In order to further increase the grip on a snow-covered road surface, both under traction and under braking conditions, it is also provided that close to the convergence points between the outer first and second stretches 8a, 8b of the outer portion 8 of each transverse groove 2, auxiliary opposite hollows 10 be provided, which are oriented substantially parallelly to the oblique stretches 3a of the circumferential grooves 3 and preferably have a lower depth than the transverse grooves 2.

Preferably the auxiliary hollows 10 belonging to each shoulder block 5 are mutually connected by an auxiliary cut 11 extending parallelly to the above mentioned oblique stretches 3a and preferably having a lower depth than said hollows.

In order to prevent the snow collected in the transverse grooves 2 from being discharged laterally, the transverse grooves are preferably provided with tapering portions at the ends 2a close to the opposite side edges 1a of the tread band 1. Still for the purpose of optimizing the tread band grip on the snow-covered road surface, both under traction and braking conditions, at least one additional side hollow 12 may be formed in each of the shoulder blocks 5. Said additional side hollow 12 substantially has the same width as the transverse grooves and extends parallelly to the latter starting from the corresponding side edge of the tread band 1.

Each of the centre 4 and shoulder 5 blocks is further provided with a plurality of fin-shaped cuts 13, of the type usually adopted in winter tyres and usually named "lamellae".

In a preferential solution of the invention, these lamellae 13 have a course substantially parallel to that of the transverse grooves 2 and are spaced apart the same distance from each other at the inside of each block 4, 5, so that each block is divided into a plurality of portions substantially having the same shape and geometric extension. This expedient enables the achievement of an excellent evenness of wear in the blocks 4, 5 and therefore a satisfactory kilometric yield, the tread band as a whole thereby offering constant performances.

It is also to be noted that, as clearly shown in Fig. 1, in order to reduce the rolling noise of the tyre, the pattern defined by the series of cuts and grooves present in one half of the tread band 1 is circumferentially offset by a pitch fraction as compared with the other half arranged in a mirror image on the opposite side of the equatorial plane "X".

The tyre in reference has furnished greatly higher performances than the best competitive products present on the market, not only as regards its running behaviour on a snow-covered road surface, which is the most important item in judging a winter tyre, but also as regards its resistance to rolling, ride behaviour on a wet roadway and driving on a dry roadway.

The inventive tyre has also achieved very satisfactory results in terms of behaviour on a frozen roadway, ride comfort and noiselessness on running.

Obviously many modifications and variations can be made to the tyre as conceived without departing from the scope of the present invention as defined by the appended claims.

## Claims

1. A pneumatic tyre for vehicle wheels comprising a tread band provided with a raised pattern particularly appropriate for running on snow-covered road surfaces, comprising:
- at least two series of transverse grooves (2) disposed on opposite sides relative to an equatorial plane (X) of the tyre and symmetrically converging at said equatorial plane (X);
- at least two circumferential grooves (3) symmetrically spaced apart from the equatorial plane (X) of the tyre and confining, together with the transverse grooves (2), one or more rows of centre blocks (4) disposed symmetrically to the equatorial plane (X) and at least two rows of shoulder blocks (5) located on respectively opposite sides relative to the centre block (4) rows,
- said circumferential grooves (3) being each defined by a sequence of stretches (3a) oriented obliquely to the circumferential direction of the tyre, the oblique stretches (3a) forming said circumferential grooves (3) symmetrically converging at the equatorial plane (X) in a direction opposite to the convergence direction of the transverse grooves (2),
characterized in that at least one grip hollow (6) is associated with each of said transverse grooves (2), said hollow (6) being of substantially trapezoidal shape and having an inner circumferential edge (6a) and an outer circumferential edge (6b) which respectively diverge in a direction opposite to the rolling direction (D) assigned to the tread band (1), each of said grip hollows (6) extending across one of said transverse grooves (2) at two contiguous centre blocks (4).

2. A pneumatic tyre according to claim 1, characterized in that said transverse grooves (2) mutually converge according to a rolling direction (D) assigned to the tread band (1).

3. A pneumatic tyre according to claim 1, characterized in that said inner circumferential edge (6a) and said outer circumferential edge (6b) mutually diverge by an angle included between 3° and 15°.

4. A tyre according to claim 1, characterized in that each of said grip hollows (6) has a maximum width included between 3 and 7 mm.

5. A tyre according to claim 1, characterized in that said inner circumferential edge (6a) is substantially parallel to the circumferential direction of the tread band (1).

6. A pneumatic tyre according to claim 1, characterized in that it further comprises a circumferential central cut (7) extending in the equatorial plane (X) to mutually separate two of said centre block rows (4).

7. A pneumatic tyre according to claim 6, characterized in that the central cut (7) generates two respectively opposite separation walls (7a) between each pair of centre blocks (4) each belonging to one of said centre rows, which walls (7a) are designed to come into mutual contact relation when the tread band (1) is locally deformed according to a flattened conformation.

8. A pneumatic tyre according to claim 7, characterized in that the central cut (7), at least at one base portion thereof, has a width included between 2 and 4 mm.

9. A pneumatic tyre according to claim 1, characterized in that each of said transverse grooves (2) has an outer portion (8) confined between two of said shoulder blocks (5), in which portion an outer first and an outer second consecutive stretch (8a, 8b) is defined which converge in a direction opposite to a rolling direction (D) assigned to the tread band (1).

10. A pneumatic tyre according to claim 9, characterized in that said outer first stretch (8a), terminating at the side edge (1a) of the tread band (1), has an inclination included between 1° and 10° to the axial direction of the tread band.

11. A pneumatic tyre according to claim 9, characterized in that said outer second stretch (8b) communicating with the respective circumferential groove (3), has an inclination included between 8° and 16° to the axial direction of the tread band (1).

12. A pneumatic tyre according to claim 1, characterized in that each of said transverse grooves (2) has a gradually increasing width, moving away from the equatorial plane (X).

13. A pneumatic tyre according to claim 9, characterized in that said outer second stretch (8b) communicating with the respective circumferential groove (3), is of a width lower than that of the outer first stretch (8a) terminating at the side edge (1a) of the tread band (1).

14. A pneumatic tyre according to claim 1, characterized in that each of said transverse grooves (2) further has an inner portion (9) extending between two centre blocks (4), in which an inner first stretch (9a) communicating with the respective circumferential groove (3) and an inner second stretch (9b) extending close to the equatorial plane (X) and having a lower width than the inner first stretch (9a) of said inner portion (9) are defined.

15. A pneumatic tyre according to claim 14, characterized in that the inner first stretch (9a) of said inner portion (9) is of lower width than the outer second stretch (8b) of said outer portion (8).

16. A pneumatic tyre according to claim 14, characterized in that the inner second stretch (9b) of said inner portion (9) is circumferentially offset in the rolling direction with respect to the inner first stretch (9a).

17. A pneumatic tyre according to claim 1, characterized in that the oblique stretches (3a) forming said circumferential grooves (3) are inclined to an angle included between 8° and 22° relative to the circumferential extension direction of the tread band (1).

18. A pneumatic tyre according to claim 1, characterized in that the oblique stretches (3a) of the circumferential grooves (3) intersect the transverse grooves (2) at an angle included between 80° and 110°.

19. A pneumatic tyre according to claim 9, characterized in that it further comprises auxiliary hollows (10) formed in the shoulder blocks (5) at the convergence points between the outer first and second stretches (8a, 8b) of the outer portion (8) of each transverse groove (2).

20. A pneumatic tyre according to claim 19, characterized in that said auxiliary hollows (10) are oriented parallelly to the oblique stretches (3a) of the circumferential grooves (3).

21. A pneumatic tyre according to claim 19, characterized in that the auxiliary hollows (10) of each shoulder block (5) are mutually interconnected by an auxiliary cut (11) extending parallelly to the oblique stretches (3a) of the circumferential grooves (3).

22. A pneumatic tyre according to claim 21, characterized in that the auxiliary cut (11) has a lower depth than the auxiliary hollows (10).

23. A pneumatic tyre according to claim 1, characterized in that the transverse grooves (2) have tapering end portions (2a) at the side edges (1a) of the tread band (1).

24. A pneumatic tyre according to claim 1, characterized in that the distance between said circumferential grooves (3) is included between 25% and 35% of the overall width of the tread band (1), measured between the opposite side edges of said band.

25. A pneumatic tyre according to claim 1, characterized in that each of said centre (4) and shoulder (5) blocks has fin-shaped cuts (13) oriented substantially parallelly to said transverse grooves (2).

26. A pneumatic tyre according to claim 1, characterized in that each of the oblique stretches (3a) of the circumferential grooves (3) extends between two consecutive transverse grooves (2) and defines respectively opposite circumferential edges of a centre block (4) and a shoulder block (5), so that each of said centre and shoulder blocks (4, 5) has a corner (4a, 5a) projecting inwardly of the respective circumferential groove (3) with respect to the opposite corner (4a, 5a) of the immediately following block.

## Patentansprüche

1. Kraftfahrzeug-Luftreifen mit einem Laufflächenband, das mit einem erhabenen Muster versehen und insbesondere zum Laufen auf schneebedeckten Straßenflächen geeignet ist
- mit wenigstens zwei Reihen von Quernuten (2), die auf gegenüberliegenden Seiten bezüglich einer Äquatorialebene (X) des Reifens angeordnet sind und symmetrisch an der Äquatorialebene (X) konvergieren,
- mit wenigstens zwei Umfangsnuten (3), die symmetrisch im Abstand von der Äquatorialebene (X) des Reifens angeordnet sind und zusammen mit den Quernuten (2) eine oder mehrere Reihen von symmetrisch zur Äquatorialebene (X) angeordneten Zentrumsblöcken (4) und wenistens zwei Reihen von Schulterblöcken (5) begrenzen, die jeweils auf gegenüberliegenden Seiten bezüglich der Zentrumsblock-(4)-Reihen angeordnet sind,
- wobei die Umfangsnuten (3) jeweils von einer Folge von Abschnitten (3a) gebildet werden, die schräg zu der Umfangsrichtung des Reifens ausgerichtet sind, und wobei die die Umfangsnuten (3) bildenden schrägen Abschnitte (3a) an der Äquatorialebene (X) in eine Richtung symmetrisch konvergieren, die zu der Konvergenzrichtung der Quernuten (2) entgegengesetzt ist,
dadurch gekennzeichnet,
- daß jeder der Quernuten (2) wenigstens ein Greifhohlraum (6) zugeordnet ist, der im wesentlichen trapezförmig ist und einen inneren Umfangsrand (6a) und einen äußeren Umfangsrand (6b) aufweist, die jeweils in eine Richtung divergieren, die zu der für das Laufflächenband (1) festgelegten Abrollrichtung (D) entgegengesetzt ist,
- wobei sich jeder der Greifhohlräume (6) quer über eine der Quernuten (2) an zwei benachbarten Zentrumsblöcken (4) erstreckt.

2. Luftreifen nach Anspruch 1, dadurch gekennzeichnet, daß die Quernuten (2) entsprechend der für das Laufflächenband (1) festgelegten Abrollrichtung (D) wechselseitig konvergieren.

3. Luftreifen nach Anspruch 1, dadurch gekennzeichnet, daß der innere Umfangsrand (6a) und der äußere Umfangsrand (6b) mit einem Winkel zwischen 3° und 15° gegenseitig divergieren.

4. Reifen nach Anspruch 1, dadurch gekennzeichnet, daß jeder der Greifhohlräume (6) eine maximale Breite zwischen 3 und 7 mm hat.

5. Reifen nach Anspruch 1, dadurch gekennzeichnet, daß der innere Umfangsrand (6a) im wesentlichen parallel zur Umfangsrichtung des Laufflächenbandes (1) ist.

6. Luftreifen nach Anspruch 1, dadurch gekennzeichnet, daß er weiterhin am Umfang einen zentralen Einschnitt (7) hat, der sich in der Äquatorialebene (X) erstreckt und zwei der Zentrumsblockreihen (4) wechselseitig trennt.

7. Luftreifen nach Anspruch 6, dadurch gekennzeichnet, daß der zentrale Einschnitt (7) zwei jeweils gegenüberliegende Trennwände (7a) zwischen jedem Paar von Zentrumsblöcken (4) erzeugt, von denen jeder zu einer der Zentrumsreihen gehört, wobei die Wände (7a) so ausgelegt sind, daß sie in eine gegenseitige Kontaktbeziehung kommen, wenn das Laufflächenband (1) bei flachgedrückter Form lokal verformt wird.

8. Luftreifen nach Anspruch 7, dadurch gekennzeichnet, daß der zentrale Einschnitt (7) wenigstens an einem Basisabschnitt von ihm eine Breite zwischen 2 und 4 mm hat.

9. Luftreifen nach Anspruch 1, dadurch gekennzeichnet, daß jede der Quernuten (2) einen zwischen zwei Schulterblöcken (5) eingeschlossenen äußeren Teil (8) hat, in welchem ein äußerer erster und ein äußerer zweiter fortlaufender Abschnitt (8a, 8b) gebildet wird, der in eine Richtung konvergiert, die zu der für die Lauffläche (1) festgelegten Abrollrichtung (D) entgegengesetzt ist.

10. Luftreifen nach Anspruch 9, dadurch gekennzeichnet, daß der äußere erste Abschnitt (8a), der an dem Seitenrand (la) des Laufflächenbandes (1) endet, eine Neigung zwischen 1° und 10° zur Axialrichtung des Laufflächenbandes hat.

11. Luftreifen nach Anspruch 9, dadurch gekennzeichnet, daß der äußere zweite Abschnitt (8b), der in Verbindung mit der jeweiligen Umfangsnut (3) steht, eine Neigung zwischen 8° und 16° zur Axialrichtung des Laufflächenbandes (1) hat.

12. Luftreifen nach Anspruch 1, dadurch gekennzeichnet, daß jede der Quernuten (2) mit Entfernung von der Äquatorialebene (X) weg eine allmählich zunehmende Breite hat.

13. Luftreifen nach Anspruch 9, dadurch gekennzeichnet, daß der äußere zweite Abschnitt (8b), der mit der jeweiligen Umfangsnut (3) in Verbindung steht, eine Breite hat, die kleiner ist als die des äußeren ersten Abschnitts (8a), der an dem Seitenrand (la) des Laufflächenbandes (1) endet.

14. Luftreifen nach Anspruch 1, dadurch gekennzeichnet, daß jede der Quernuten (2) weiterhin einen sich zwischen zwei Zentrumsblöcken (4) erstreckenden inneren Teil (9) hat, in welchem ein innerer erster Abschnitt (9a), der mit der jeweiligen Umfangsnut (3) in Verbindung steht, und ein innerer zweiter Abschnitt (9b) gebildet werden, der sich bis in die Nähe der Äquatorialebene (X) erstreckt und eine Breite hat, die kleiner ist als die des inneren ersten Abschnitts (9a) des inneren Teils (9).

15. Luftreifen nach Anspruch 14, dadurch gekennzeichnet, daß der innere erste Abschnitt (9a) des inneren Teils (9) eine Breite hat, die kleiner ist die des äußeren zweiten Abschnitts (8b) des äußeren Teils (8).

16. Luftreifen nach Anspruch 14, dadurch gekennzeichnet, daß der innere zweite Abschnitt (9b) des inneren Teils (9) am Umfang in der Abrollrichtung bezüglich des inneren ersten Abschnitts (9a) versetzt ist.

17. Luftreifen nach Anspruch 1, dadurch gekennzeichnet, daß die die Umfangsnut (3) bildenden schrägen Abschnitte (3a) in einem Winkel zwischen 8° und 22° bezüglich der Umfamngserstreckungsrichtung des Laufflächenbandes (1) geneigt sind.

18. Luftreifen nach Anspruch 1, dadurch gekennzeichnet, daß die schrägen Abschnitte (3a) der Umfangsnut (3) die Quernuten (2) in einem Winkel zwischen 80° und 110° schneiden.

19. Luftreifen nach Anspruch 9, dadurch gekennzeichnet, daß er weitere zusätzliche Hohzlräume (10) aufweist, die in den Schulterblöcken (5) an den Konvergenzpunkten zwischen den äußeren ersten und zweiten Abschnitten (8a, 8b) des äußeren Teils (8) jeder Quernut (2) ausgebildet sind.

20. Luftreifen nach Anspruch 19, dadurch gekennzeichnet, daß die zusätzlichen Hohlräume (10) parallel zu den schrägen Abschnitten (3a) der Umfangsnuten (3) ausgerichtet sind.

21. Luftreifen nach Anspruch 19, dadurch gekennzeichnet, daß die zusätzlichen Hohlräume (10) eines jeden Schulterblocks (5) wechselseitig durch einen zusätzlichen Einschnit (11) miteinander verbunden sind, der sich parallel zu den schrägen Abschnitten (3a) der Umfangsnuten (3) erstreckt.

22. Luftreifen nach Anspruch 21, dadurch gekennzeichnet, daß der zusätzliche Einschnitt (11) eine Tiefe hat, die geringer ist als die der zusätzlichen Hohlräume (10).

23. Luftreifen nach Anspruch 1, dadurch gekennzeichnet, daß die Quernuten (2) sich verjüngende Endabschnitte (2a) an den Seitenrändern (la) des Laufflächenbandes (1) haben.

24. Luftreifen nach Ansppruch 1, dadurch gekennzeichnet, daß der Abstand zwischen den Umfangsnuten (3) zwischen 25% und 35% der Gesamtbreite des Laufflächenbandes (1) gemessen zwischen den gegenüberliegenden Seitenrändern des Bandes beträgt.

25. Luftreifen nach Anspruch 1, dadurch gekennzeichnet, daß jeder Zentrumsblock (4) und jeder Schulterblock (5) rippenförmige Einschnitte (13) aufweist, die im wesentlichen parallel zu den Quernuten (2) ausgerichtet sind.

26. Luftreifen nach Anspruch 1, dadurch gekennzeichnet, daß jeder der schrägen Abschnitte (3a) der Umfangsnuten (3) sich zwischen zwei aufeinanderfolgenden Quernuten (2) erstreckt und jeweils gegenüberliegende Umfangsränder eines Zentrumsblocks (4) und eines Schulterblocks (5) bildet, so daß jeder der Zentrums- und Schulterblöcke (4, 5) eine Ecke (4a, 5a) hat, die nach innen von der jweiligen Umfangsnut (3) bezüglich der gegenüberliegenden Ecke (4a, 5a) des unmittelbar folgenden Blocks vorsteht.

## Revendications

1. Bandage pneumatique pour roues de véhicule comprenant une bande de roulement munie d'un profil particulièrement adapté au roulage sur surfaces couvertes de neige, comprenant :
- au moins deux séries de rainures transversales (2) disposées sur des côtés opposés par rapport à un plan équatorial (X) du pneumatique et convergeant symétriquement au niveau dudit plan équatorial (X);
- au moins deux rainures circonférentielles (3) réalisées, symétriquement, à une certaine distance du plan équatorial (X) du pneumatique et délimitant, avec les rainures transversales, une ou plusieurs rangées de blocs centraux (4) disposées symétriquement par rapport au plan équatorial (X) et au moins deux rangées de blocs d'épaulement (5) situées sur des côtés respectivement opposés par rapport aux rangées de blocs centraux (4),
- lesdites rainures circonférentielles (3) étant chacune définie par une suite de sections (3a) orientées obliquement par rapport à la direction circonférentielle du pneumatique, les sections obliques (3a) formant lesdites rainures circonférentielles (3) convergeant symétriquement au niveau dudit plan équatorial (X) dans une direction opposée à la direction de convergence des rainures transversales (2), caractérisé en ce que au moins un creux d'adhérence (6) est associé à chacune desdites rainures transversales (2), ledit creux (6) étant de forme sensiblement trapézoïdale et comportant un bord circonférentiel intérieur (6a) et un bord circonférentiel extérieur (6b) qui s'écartent respectivement dans une direction opposée à la direction de roulement (D) attribuée à la bande de roulement (1), chacun desdits creux d'adhérence (6) s'étendant en travers de l'une desdites rainures transversales (2) au niveau de deux blocs centraux (4) contigus.

2. Bandage pneumatique selon la revendication 1, caractérisé en ce que lesdites rainures transversales (2) convergent mutuellement suivant une direction de roulement (D) attribuée à la bande de roulement (1).

3. Bandage pneumatique selon la revendication 1, caractérisé en ce que ledit bord circonférentiel intérieur (6a) et ledit bord circonférentiel extérieur (6b) s'écartent mutuellement d'un angle compris entre 3° et 15°.

4. Pneumatique selon la revendication 1, caractérisé en ce que chacun desdits creux d'adhérence (6) a une largeur maximale comprise entre 3 et 7 mm.

5. Pneumatique selon la revendication 1, caractérisé en ce que ledit bord circonférentiel intérieur (6a) est sensiblement parallèle à la direction circonférentielle de la bande de roulement (1).

6. Bandage pneumatique selon la revendication 1, caractérisé en ce qu'il comprend en outre une fente circonférentielle centrale (7) s'étendant dans le plan équatorial (X) pour séparer mutuellement deux desdites rangées de blocs centraux (4).

7. Bandage pneumatique selon la revendication 6, caractérisé en ce que la fente centrale (7) génère deux parois de séparation (7a) respectivement opposées entre chaque paire de blocs centraux (4), chacune appartenant à l'une desdites rangées centrales, lesquelles parois (7a) sont conçues pour venir en relation de contact mutuel lorsque la bande de roulement (1) est déformée localement suivant une conformation aplatie.

8. Bandage pneumatique selon la revendication 7, caractérisé en ce que la fente centrale (7), au moins en une partie de base de celle-ci, a une largeur comprise entre 2 et 4 mm.

9. Bandage pneumatique selon la revendication 1, caractérisé en ce que chacune desdites rainures transversales (2) comporte une partie extérieure (8) délimitée par deux desdits blocs d'épaulement (5), partie dans laquelle sont définies une première section extérieure et une seconde section extérieure (8a, 8b) consécutives qui convergent dans une direction opposée à une direction de roulement (D) attribuée à la bande de roulement (1).

10. Bandage pneumatique selon la revendication 9, caractérisé en ce que ladite première section extérieure (8a), se terminant au niveau du bord latéral (la) de la bande de roulement (1), a une inclinaison comprise entre 1° et 10° par rapport à la direction axiale de la bande de roulement.

11. Bandage pneumatique selon la revendication 9, caractérisé en ce que ladite seconde section extérieure (8b) communiquant avec la rainure circonférentielle (3) respective, a une inclinaison comprise entre 8° et 16° par rapport à la direction axiale de la bande de roulement (1).

12. Bandage pneumatique selon la revendication 1, caractérisé en ce que chacune desdites rainures transversales (2) a une largeur augmentant graduellement, en s'éloignant du plan équatorial (X).

13. Bandage pneumatique selon la revendication 9, caractérisé en ce que ladite seconde section extérieure (8b) communiquant avec la rainure circonférentielle (3) respective, est de largeur inférieure à celle de la première section extérieure (8a) se terminant au niveau du bord latéral (la) de la bande de roulement (1).

14. Bandage pneumatique selon la revendication 1, caractérisé en ce que chacune desdites rainures transversales (2) comporte en outre une partie intérieure (9) s'étendant entre deux blocs centraux (4), dans laquelle sont définies une première section intérieure (9a) communiquant avec la rainure circonférentielle (3) respective et une seconde section intérieure (9b) s'étendant à proximité du plan équatorial (X) et ayant une largeur inférieure à la première section intérieure (9a) de ladite partie intérieure (9).

15. Bandage pneumatique selon la revendication 14, caractérisé en ce que la première section intérieure (9a) de ladite partie intérieure (9) est de largeur inférieure à la seconde section extérieure (8b) de ladite partie extérieure (8).

16. Bandage pneumatique selon la revendication 14, caractérisé en ce que la seconde section intérieure (9b) de ladite partie intérieure (9) est décalée circonférentiellement dans la direction de roulement par rapport à la première section intérieure (9a).

17. Bandage pneumatique selon la revendication 1, caractérisé en ce que les sections obliques (3a) formant lesdites rainures circonférentielles (3) sont inclinées d'un angle compris entre 8° et 22° par rapport à la direction d'extension circonférentielle de la bande de roulement (1).

18. Bandage pneumatique selon la revendication 1, caractérisé en ce que les sections obliques (3a) des rainures circonférentielles (3) coupent les rainures transversales (2) en formant un angle compris entre 80° et 110°.

19. Bandage pneumatique selon la revendication 9, caractérisé en ce qu'il comprend en outre des creux auxiliaires (10) réalisés dans les blocs d'épaulement (5) au niveau des points de convergence entre les première et seconde sections extérieures (8a, 8b) de la partie extérieure (8) de chaque rainure transversale (2).

20. Bandage pneumatique selon la revendication 19, caractérisé en ce que lesdits creux auxiliaires (10) sont orientés parallèlement aux sections obliques (3a) des rainures circonférentielles (3).

21. Bandage pneumatique selon la revendication 19, caractérisé en ce que les creux auxiliaires (10) de chaque bloc d'épaulement (5) sont mutuellement interconnectés par une fente auxiliaire (11) s'étendant parallèlement aux sections obliques (3a) des rainures circonférentielles (3).

22. Bandage pneumatique selon la revendication 21, caractérisé en ce que la fente auxiliaire (11) a une profondeur inférieure à celle des creux auxiliaires (10).

23. Bandage pneumatique selon la revendication 1, caractérisé en ce que les rainures transversales (2) comportent des parties d'extrémité rétrécies (2a) au niveau des bords latéraux (la) de la bande de roulement (1).

24. Bandage pneumatique selon la revendication 1, caractérisé en ce que la distance séparant lesdites rainures circonférentielles (3) est comprise entre 25 % et 35 % de la largeur totale de la bande de roulement (1), mesurée entre les bords latéraux opposés de ladite bande.

25. Bandage pneumatique selon la revendication 1, caractérisé en ce que chacun desdits blocs centraux (4) et d'épaulement (5) comporte des fentes (13) en forme d'ondes, orientées sensiblement parallèlement auxdites rainures transversales (2).

26. Bandage pneumatique selon la revendication 1, caractérisé en ce que chacune des sections obliques (3a) des rainures circonférentielles (3) s'étend entre deux rainures transversales (2) consécutives et définit les bords circonférentiels respectivement opposés d'un bloc central (4) et d'un bloc d'épaulement (5), de sorte que chacun desdits blocs central et d'épaulement (4, 5) comporte un angle (4a, 5a) faisant saillie vers l'intérieur de la rainure circonférentielle (3) respective par rapport à l'angle opposé (4a, 5a) du bloc situé à proximité immédiate.
